# EUROPÄISCHE PATENTSCHRIFT

(11) **EP 2 183 961 B1**
(45) Veröffentlichungstag und Bekanntmachung des Hinweises auf die Patenterteilung: **14.07.2010**
(21) Anmeldenummer: 09006112.8
(22) Anmeldetag: 05.05.2009
(51) Int. Cl.: A01G 13/02

(54) **Folienueberdachungssystem**
Film canopy system
Système de toiture à feuilles

(30) Priorität: 06.11.2008 DE 202008014784 U
(43) Veröffentlichungstag der Anmeldung: 12.05.2010
(73) Patentinhaber: Braendlin, Oswald, 79588 Efringen-Kirchen (DE)
(72) Erfinder: Braendlin, Oswald, 79588 Efringen-Kirchen (DE)
(74) Vertreter: Zimmermann, Günter

(56) Entgegenhaltungen:
- WO-A1-03/073835
- WO-A1-2009/037388
- AT-B- 398 816
- JP-A- 1 095 710

## Beschreibung

Die Erfindung bezieht sich auf ein Folienüberdachungssystem für Obstanlagen als Wetterschutz mit mehreren Pfostenreihen, wobei über jede Pfostenreihe mindestens ein Firstdraht und quer dazu an jedem Pfosten ein Querdraht verläuft und eine Folie zwischen jedem Firstdraht und einem am bodennahen Ende der Folie angeordneten und mit dem Querdraht verbindbaren Spannelement verspannt ist.

Ein derartiges Folienüberdachungssystem ist durch die DE 101 53 703 A1 bekannt. Bei diesem bekannten System besteht die Folie aus mehreren sich überlappenden Bahnen, welche zusätzlich an seitlichen Spanndrähten abgespannt sind und mittels elastischer Rückstellelemente an den seitlichen Spanndrähten fixiert sind. Bei starken Winden oder Windböen werden die Bahnen durch die Windkraft ausgeschwenkt und es entstehen Öffnungen in den Bahnen, so dass die Luft durch die Bahnen hindurchströmen kann. Dadurch wird die Folie bei Windeinwirkung nicht zerrissen oder sogar vollständig zerstört. Das bekannte System ist nachteiligerweise recht aufwendig konstruiert und bei schräg einfallendem Regen in Verbindung mit starkem Wind können die Niederschläge durch die sich überlappenden Bahnen hindurch auf die zu schützenden Anlagen niedergehen.

Durch die EP1 203 526 A1 ist eine weitere Wetterschutzvorrichtung für Obstanlagen bekannt, bei welcher die Folie mittels einer Rolle über die einzelnen Pflanzenreihen auf- und abgewickelt werden kann. Auch durch die US-A-5 311 699 ist eine Vorrichtung zum Schutz von Weinreben vor Hagelschlag bekannt, bei welcher die an Pfosten und Spanndrähten spalierartig angebauten Rebenreihen durch abrollbare Abdeckplanen abdeckbar sind. Die Abdeckplanen sind mittels Hacken an einem Firstdraht und an seitlichen Spanndrähten befestigt. An einem Ende ist die Plane auf eine Hülse aufgewickelt, wobei das Auf- und Abrollen der Plane mittels einer Kurbel durchgeführt werden kann, indem in die Hülse eine zweiteilige Wickelhülse eingeführt wird.

Eine weitere Schutzvorrichtung für Obstanlagen ist durch die FR 28 83 320 A1 bekannt, wobei die einzelnen Planen an ihrem einen Ende über Gurte mit einem Rohr verbunden sind. Dabei wird ein Rohr für zwei benachbarte Planen verwendet und ein Auf- und Abrollen der Planen über das Rohr ist nicht vorgesehen.

Ein Weiteres Folienüberdachungssystem ist durch die WO 03/073835 bekannt, die die Merkmale vom Oberbegriff des Anspruchs 1 offenbart.

Die Aufgabe der Erfindung wird somit darin gesehen, das Folienüberdachungssystem der eingangs genannten Art derart weiterzuentwickeln, dass das System mit geringem Aufwand montierbar ist und eine Beschädigung der Folie bei starken Winden oder Windböen vermieden wird. Zusätzlich soll die Folienüberdachung bei plötzlicher Wetterverschlechterung in kurzer Zeit einsatzbereit sein.

Zur Lösung dieser Aufgabe wird ein Folienüberdachungssystem gemäß den Merkmalen des Anspruchs 1 erfindungsgemäß vorgeschlagen.

Durch die Verwendung des Rohres anstelle des im Stand der Technik bekannten Spanndrahtes kann die Folie in kurzer Zeit auf dem Rohr auf- oder abgerollt werden. In der abgerollten Position ist das Rohr mit dem Querdraht verbunden, während das Rohr in aufgerollter Position in geeigneter Weise am oberen Ende der Pfosten in einer Warteposition gehalten wird. Bei plötzlicher Wetterverschlechterung ist die Folienüberdachung somit in kurzer Zeit einsatzbereit. Durch die Befestigung der Folie an dem Rohr mittels elastischer Verbindungselemente wird bei starken Winden die Windkraft nicht schlagartig auf die Folie übertragen, sondern in einer abgeschwächten und gedämpften Weise. Dadurch wird eine Beschädigung der Folie, insbesondere ein Ausreißen der Verbindungselemente aus der Folie vermieden. Die Verbindungselemente können Federzüge, Gummizüge oder ein Schlauchgummi sein und in geeigneter Weise sowohl an der Folie als auch an dem Rohr beispielsweise durch Einknoten angebracht sein. Für das Einknoten in die Folie können am bodennahen Ende der Folie entweder Ösen vorgesehen sein oder bei gewebeartigen Folien kann ein Loch eingestochen werden, in welches dann das Verbindungselement eingeknotet wird. Eine besonders bevorzugte Ausführungsform der Erfindung sieht vor, dass das Rohr über weitere elastische Verbindungselemente mit dem Querdraht lösbar verbindbar ist. Um die Windkraft weiter zu dämpfen ist auch das Rohr beispielsweise mit Gummizügen oder Gummischläuchen mit dem Querdraht verknotet. Eine weitere Ausgestaltung der Erfindung sieht vor, dass zwischen zwei Pfostenreihen das Rohr zusammen mit dem angrenzenden Rohr der benachbarten Pfostenreihe über elastische Verbindungselemente lösbar verbindbar ist und zusätzlich auch mit dem Querdraht über dieselben elastischen Verbindungselemente lösbar verbindbar ist.

Das Rohr ist vorteilhafterweise ein Vierkantrohr. Dies hat den Vorteil, dass das elastische Verbindungselement auch bei einer Befestigung an dem Rohr mittels Einknoten drehfest mit dem Vierkantrohr verbunden ist und andererseits zusätzlich an einem offenen Ende oder auch an beiden offenen Enden des Vierkantrohres eine Kurbel zum Aufrollen der Folie eingesteckt werden kann. Die Kurbel ist in geeigneter Weise an die Innenmaße des Rohres angepasst, so dass ein geeigneter formschlüssiger Kraftübertrag entsteht.

Eine weitere Ausführungsform der Erfindung sieht vor, dass das firstnahe Ende der Folie mit dem Firstdraht entweder fest verbindbar oder elastisch verbindbar ist. Wenn im Bereich des Firstdrahtes ebenfalls elastische Verbindungselemente vorgesehen sind, so ergibt sich ein System, welches in drei Bereichen, nämlich im Firstbereich, im bodennahen Endbereich der Folie und im Verbindungsbereich des Rohres mit dem Querdraht jeweils eine Dämpfungszone für die Windkraft durch die elastischen Verbindungselemente hat. Das gesamte erfindungsgemäße System kann also bei starkem Wind oder plötzlichen Windböen in unterschiedliche Richtungen auf den Winddruck oder den Windsog reagieren, so dass eine Beschädigung der Folie vermieden wird. Damit die Obstanlagen ohne Hindernisse frei begehbar sind und der Querdraht nicht störend wirkt, verläuft zweckmäßigerweise der Querdraht in dreiviertel der Pfostenhöhe. Üblicherweise sind die Querdrähte knapp 3 Meter vom Boden entfernt und der Firstdraht ist nochmals 1 Meter vom Querdraht entfernt.

Eine weitere Ausführungsform der Erfindung sieht vor, dass an dem Querdraht neben den angrenzenden Rohren ein erstes ringförmiges Befestigungselement und ein zweites ringförmiges Befestigungselement angebracht sind, wobei in jeweils ein Befestigungselement ein hakenförmiges Ende des elastischen Verbindungselementes einhängbar ist. Die ringförmige Ausbildung des Befestigungselementes an dem Querdraht und die hakenförmigen Enden des elastischen Verbindungselementes haben den Vorteil, dass die Verbindungselemente auf schnelle Weise an den Befestigungselementen eingehängt und ausgehängt werden können. Als Verbindungselement ist beispielsweise ein Expandergummi denkbar. Das Verbindungselement kann von dem ersten Befestigungselement ausgehend um das naheliegende Rohr herum und wieder zurück zu dem ersten Befestigungselement geführt werden. Als besonders vorteilhaft hat es sich jedoch bei einer weiteren Ausführungsform der Erfindung herausgestellt, dass das elastische Verbindungselement von dem ersten ringförmigen Befestigungselement ausgehend zuerst über das naheliegende Rohr geführt ist, dann schlaufenförmig um das weiterentfernte Rohr gewickelt ist, dann wiederum schlaufenförmig um das naheliegende Rohr gewickelt ist und dann über das weiterentfernte Rohr geführt und in das zweite ringförmige Befestigungselement eingehängt ist. Dadurch werden die beiden angrenzenden Rohre auf elastische Weise besonders gut im Bereich des Querdrahts gehalten und können nicht mehr, insbesondere bei sehr starken Winden, über den Windsog an der Folie nach oben gerissen werden.

Bei einer weiteren Ausführungsform der Erfindung ist über das obere Ende jedes Pfostens ein Abspannelement geführt, welches mit mindestens einen Ende in ein erstes ringförmiges Befestigungselement am Querdraht eingehängt ist. Das Abspannelement schützt die Bäume, falls die Folie durch den Wind gegen die Bäume gedrückt werden sollte. Die Folie liegt bei Winddruck auf dem Abspannelement auf. Bei einer weiteren Ausgestaltung der Erfindung ist das Abspannelement über das obere Ende des Pfostens geführt und mit einem Ende in das erste Befestigungselement und mit dem anderen Ende in ein zweites Befestigungselement am Querdraht eingehängt. Vorteilhafterweise ist am oberen Ende jedes Pfostens eine nach oben offene Ausnehmung vorgesehen, in welcher der Firstdraht verläuft. Damit die aufgewickelte Folie mit dem Rohr am oberen Ende des Pfostens angebracht werden kann, sieht eine weitere Ausgestaltung der Erfindung vor, dass an jedem Rohr mindestens ein kreuzförmiges Fixierelement aufgesteckt ist. Das Fixierelement kann ein kreuzförmiger Vierkantrohrabschnitt sein, wobei ein Rohrabschnitt auf das Rohr aufgesteckt ist und der andere Rohrabschnitt auf eine am Pfosten angeordnete Metallstange zur Fixierung aufgesteckt wird. Weiterhin wird zum Schutz gegen Alterung der Folie durch Sonneneinwirkung bei einer weiteren Ausführungsform der Erfindung in das firstnahe Ende der Folie ein Sonnenschutzmaterial eingebracht.

Die Erfindung wird nachstehend anhand der Zeichnung näher erläutert. Die Zeichnung zeigt Ausführungsbeispiele der Erfindung. Hierbei stellen dar:

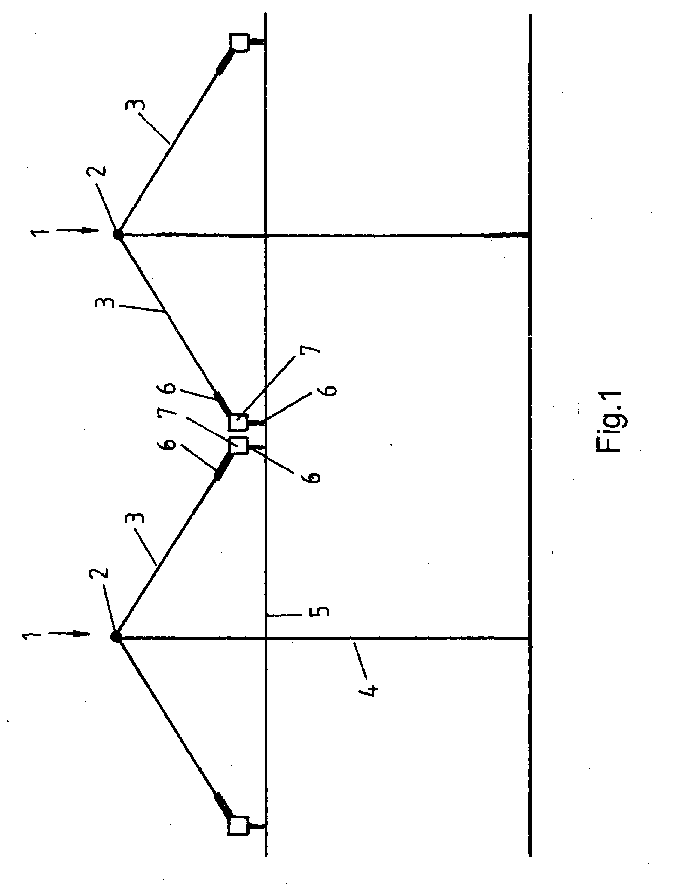

Fig.1 einen schematischen abgebrochenen Querschnitt,
Fig.2 einen schematischen Ausschnitt im Bereich benachbarter Rohre mit einem Verbindungselement gemäß einem weiteren Ausführungsbeispiel,
Fig.3 einen schematischen Ausschnitt im Bereich einer Pfostenreihe mit abgewickelter Folie,
Fig.4 eine Darstellung gemäß Fig.3 mit aufgewickelter Folie,
Fig.5 einen abgebrochenen Querschnitt am oberen Ende eines Pfostens,
Fig.6 eine Draufsicht auf ein Fixierelement für ein Rohr und
Fig.7 eine Seitenansicht nach Fig.6.

Das Folienüberdachungssystem weist mehrere nebeneinander angeordnete Pfostenreihen 1 auf. Über jede Pfostenreihe 1 verläuft ein Firstdraht 2, in welchen eine Folie 3 mit ihrem firstnahen Ende eingenäht ist. Ein zweiter Firstdraht 2 für die Folie 3 auf der gegenüberliegenden Seite verläuft ebenfalls über die Pfostenreihe 1. Der Firstdraht 2 ist mit dem oberen Ende jedes Pfostens 4 entweder über einen Langhut, welches eine Plastikkappe mit Nut und Schraube ist, oder über eine sonstige Firsthalterung für zwei Firstdrähte 2 verbunden. Zusätzlich zu dem Firstdraht 2 verläuft quer dazu an jedem Pfosten 4 ein Querdraht 5, welcher sich etwa in dreiviertel Höhe des Pfostens 4 befindet. Entlang jeder Pfostenreihe 1 gesehen sind somit eine Vielzahl von Querdrähten 5 hintereinander angeordnet. Am bodennahen Ende der Folie 3 ist die Folie mittels vieler elastischer Verbindungselemente 6 mit einem Rohr 7 verbunden. Jedes Verbindungselement 6 ist durch eine Öse in der Folie 3 geführt und das Rohr 7 ist in das schlaufenförmige Verbindungselement 6 eingeknotet. Das Rohr 7 wiederum ist mit dem Querdraht 5 ebenfalls über elastische Verbindungselemente 6 verbunden. Jedes Rohr 7 kann separat mit dem Querdraht 5 verbunden sein. Angrenzend an jedes Rohr 7 ist das benachbarte Rohr 7 der Konstruktion für die benachbarte Pfostenreihe 1 angeordnet. Es ist auch denkbar, dass die beiden angrenzenden Rohre 7 zusammen über elastische Verbindungselemente 6 verbunden sind, welche zusätzlich auch mit dem Querdraht 5 verbunden sind. Beispielsweise mittels eines Schlauchgummis in Form einer Schlaufe können die beiden Rohre 7 zusammengebunden und zusätzlich mit dem Querdraht 5 verknotet werden. Jedes Rohr 7 ist ein Vierkantrohr, an dessen offenes Ende eine in der Zeichnung nicht dargestellte Kurbel zum Aufrollen der Folie 3 einsteckbar ist. Durch Lösen der Verbindungselemente 6 zwischen dem Rohr 7 und dem Querdraht 5 und anschließendes Aufrollen der Folie 3 auf das Rohr 7 kann die Folie 3 in schneller Weise in eine Warteposition im Bereich des Firstdrahtes 2 gebracht werden. Ebenso kann die Folie 3 durch Abrollen und Befestigen des Rohres 7 an dem Querdraht 5 in zügiger Weise in Schutzposition bei schneller Wetterverschlechterung gebracht werden. Das Rohr 7, welches seitlich entlang der Pfostenreihe 1 verläuft, kann entweder mit jedem Querdraht 5 oder nur mit einzelnen ausgewählten Querdrähten 5 verbunden werden. Üblicherweise haben die Querdrähte 5 einen Abstand von 4 bis 6 Meter voneinander.

Das erfindungsgemäße Folienüberdachungssystem hat eine große Stabilität bei starken Winden und die Schutzfunktion der Folie ist mit geringem Arbeitsaufwand durch Auf- und Abrollen der Folie in schneller Weise gewährleistet.

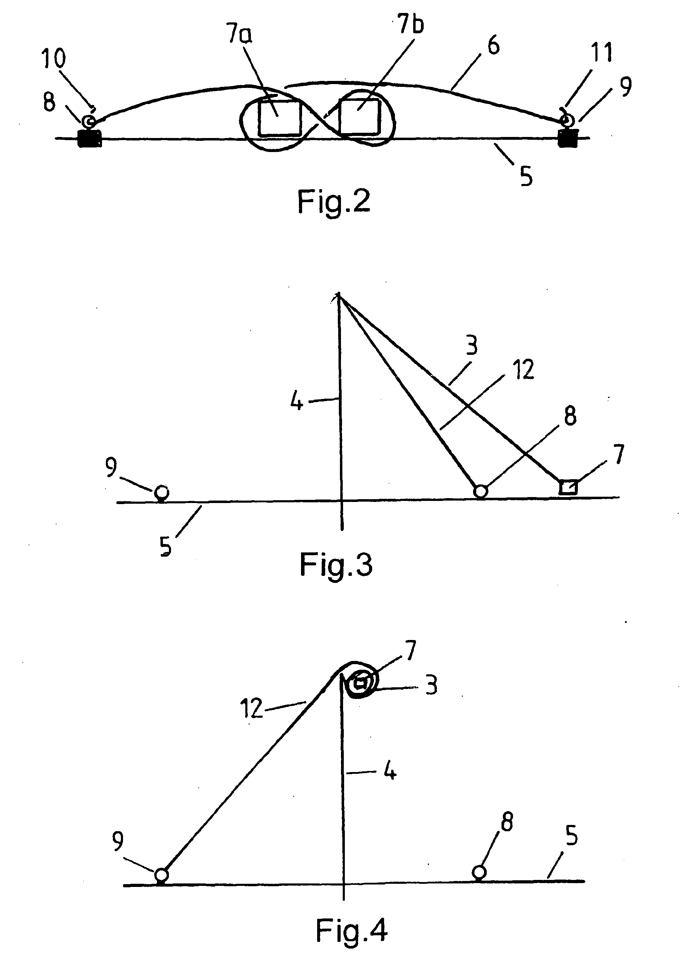

Wie aus Fig.2 ersichtlich, sind an dem Querdraht 5 neben den angrenzenden Rohren 7a, 7b ein erstes ringförmiges Befestigungselement 8 und ein zweites ringförmiges Befestigungselement 9 angebracht, wobei in das erste Befestigungselement 8 ein hakenförmiges Ende 10 des elastischen Verbindungselementes 6 eingehängt ist und in das zweite Befestigungselement 9 das andere hakenförmiges Ende 11 des elastischen Verbindungselementes 6 eingehängt ist. Dabei wird das elastische Verbindungselement 6 von dem ersten ringförmigen Befestigungselement 8 ausgehend zuerst über das naheliegende Rohr 7a geführt, dann schlaufenförmig um das weiterentfernte Rohr 7b gewickelt, dann wiederum schlaufenförmig um das naheliegende Rohr 7a gewickelt und dann über das weiterentfernte Rohr 7b geführt und in das zweite ringförmige Befestigungselement 9 eingehängt. Die Befestigung der Rohre 7a, 7b mit dem elastischen Verbindungselement 6 erfolgt bei dem Folienüberdachungssystem an jedem Querdraht 5 bis auf den ersten Querdraht und den letzten Querdraht in einer Reihe. An dem ersten Querdraht 5 und dem letzten Querdraht 5 werden die Eisenrohre 7a, 7b mit Metallklemmen befestigt.

Jedes Rohr 7a, 7b besteht aus mehreren Rohren, wobei an den Verbindungsbereichen Hülsen vorgesehen sind, in welche die beiden Enden der zu verbindenden Rohre eingesteckt sind. Mittels Selbstbohrschrauben werden dann die Hülsen mit den Rohren verbunden.

Fig.3 zeigt eine weitere Ausführungsform der Erfindung, bei welcher über das obere Ende jedes Pfostens 4 ein Abspannelement 12 geführt ist, welches mit seinen Enden in das erste ringförmige Befestigungselement 8 und das zweite ringförmige Befestigungselement 9 eingehängt ist. In Fig.3 ist nur die rechte Hälfte des Abspannelementes 12, welche in das Befestigungselement 8 eingehängt ist, und nur die rechte Folie 3 gezeigt. In gleicher Weise ist die linke Hälfte des Abspannelementes 12 in das Befestigungselement 9 eingehängt. Wenn die Folie 3 abgewickelt ist, so dient dieses Abspannelement 12 als ein Schutz der Obstbäume, falls die Folie 3 durch den Wind gegen die Bäume gedrückt wird. Die Folie 3 liegt bei einem derartigen Winddruck dann auf den Abspannelementen 12 auf, welche in vorstehend beschriebener Weise an jedem Querdraht 5 angeordnet sind. Wenn wie in Fig.4 dargestellt, die Folie 3 aufgewickelt ist, beispielsweise für die sogenannte Winterfixierung, dann wird die eine Hälfte des Abspannelements 12, beispielsweise diejenige Hälfte, welche in dem ersten ringförmigen Befestigungselement 8 eingehängt ist, von dem Befestigungselement 8 gelöst und um die aufgewickelte Folie 3 herum über das obere Ende des Pfostens 4 geworfen und auf der anderen Seite in das zweite ringförmige Befestigungselement 9 eingehängt. In gleicher Weise wird mit der anderen linken Hälfte des Abspannelementes 12 verfahren, welche an dem zweiten Befestigungselement 9 eingehängt ist. Dieses Abspannelement 12 wird dann ebenfalls über die von links her aufgewickelte Folie 3 herumgeworfen und in das erste ringförmige Befestigungselement 8 eingehängt. Damit sind die beiden aufgewickelten Folien 3, welche sich an beiden Seiten neben dem Pfosten 4 befinden, in geeigneter Weise fixiert. Als Abspannelement wird vorteilhafterweise eine Kunststoffschnur verwendet.

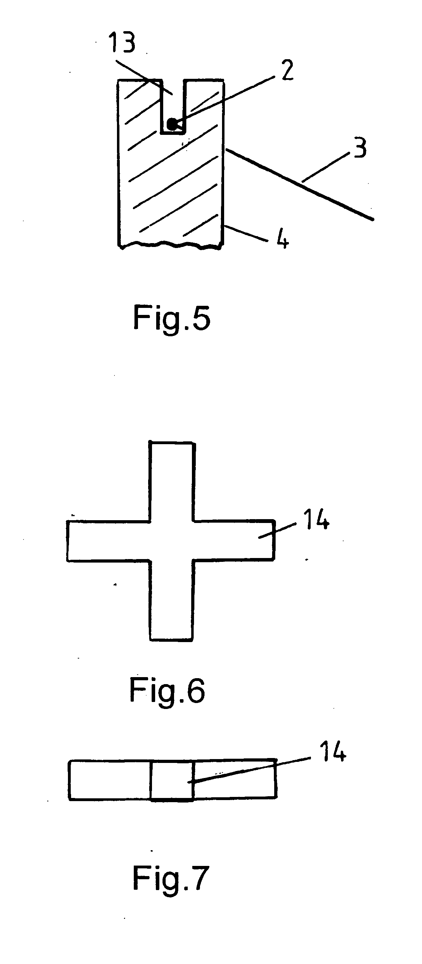

Wenn die Folie 3 mit ihrem firstnahen Ende vollständig in den Firstdraht 2 eingenäht ist, dann wird der Firstdraht 2 über eine am oberen Ende jedes Pfostens 4 angeordnete Firsthalterung gehalten. Bei der in Fig.5 dargestellten Befestigungsmöglichkeit für den Firstdraht 2 ist eine nach oben hin offene Ausnehmung 13 in Form eines Schlitzes in dem oberen Ende des Pfostens 4 angebracht. In dieser Ausnehmung 13 verläuft der Firstdraht 2, wobei die Folie im Bereich des Pfostens 4 aufgeschnitten ist, damit das neben der Ausnehmung 13 verbleibende Pfostenende durch die Folie 3 hindurchragen kann. Die Folie 3 ist in den übrigen Bereichen außerhalb des Bereichs des Pfostenendes ebenfalls mit ihrem firstnahen Ende in den Firstdraht 2 eingenäht. Es ist auch denkbar, die Folie 3 nicht einzunähen, sondern mit Ösen an dem Firstdraht 2 zu befestigen.

Fig. 6 zeigt ein kreuzförmiges Fixierelement 14, um die aufgewickelte Folie 3 mit dem Rohr 7 am oberen Ende des Pfostens 4 zu befestigen. Hierzu sind an jedem Rohr 7 an beiden Enden jeweils ein kreuzförmiges Fixierelement 14 aufgesteckt. Das Fixierelement 14 ist ein kreuzförmiger Vierkantrohrabschnitt, wobei ein Rohrabschnitt auf das Rohr 7, ebenfalls ein Vierkantrohr, aufgesteckt ist und der andere Rohrabschnitt auf eine am Pfosten angeordnete Metallstange zur Fixierung aufgesteckt wird, nachdem die Folie 3 aufgewickelt ist und sich am oberen Ende des Pfostens 4 befindet. Um die Folie in aufgewickeltem Zustand vor Alterung durch Sonneneinstrahlung zu schützen, ist in das firstnahe Ende der Folie ein Sonnenschutzmaterial eingebracht ist. Dieses firstnahe Ende der Folie bildet die Hülle der aufgewickelten Folie nach außen und dient so als Schutz.

## Patentansprüche

1. Folienüberdachungssystem für Obstanlagen als Wetterschutz mit mehreren Pfostenreihen (1), wobei über jede Pfostenreihe (1) mindestens ein Firstdraht (2) und quer dazu an jedem Pfosten (4) ein Querdraht (5) verläuft und eine Folie (3) zwischen jedem Firstdraht (2) und einem am bodennahen Ende der Folie (3) angeordneten Spannelement (7) verspannt ist, wobei das Spannelement (7) ein Rohr ist, auf welches die Folie (3) auf- und abwickelbar ist,
**dadurch gekennzeichnet,**
**dass** das bodennahe Ende der Folie (3) über elastische Verbindungselemente (6) mit dem Rohr (7) verbunden ist und das Rohr (7) über weitere elastische Verbindungselemente (6) mit dem Querdraht (5) lösbar verbunden ist und das Rohr (7) ein Vierkantrohr ist, in dessen offenes Ende eine Kurbel zum Aufrollen der Folie (3) einsteckbar ist.

2. System nach Anspruch 1,
**dadurch gekennzeichnet,**
**dass** zwischen zwei Pfostenreihen (1) das Rohr (7) zusammen mit dem angrenzenden Rohr (7) der benachbarten Pfostenreihe (1) über elastische Verbindungselemente (6) lösbar verbindbar ist.

3. System nach Anspruch 2,
**dadurch gekennzeichnet,**
**dass** zwischen zwei Pfostenreihen (1) das Rohr (7) zusammen mit dem angrenzenden Rohr (7) der benachbarten Pfostenreihe (1) und mit dem Querdraht (5) über elastische Verbindungselemente (6) lösbar verbindbar ist.

4. System nach einem der vorhergehenden Ansprüche,
**dadurch gekennzeichnet,**
**dass** das firstnahe Ende der Folie (3) mit dem Firstdraht (2) fest verbindbar oder elastisch verbindbar ist.

5. System nach einem der vorhergehenden Ansprüche,
**dadurch gekennzeichnet,**
**dass** der Querdraht (5) in dreiviertel der Höhe jedes Pfostens (4) verläuft.

6. System nach Anspruch 1 oder 2,
**dadurch gekennzeichnet,**
**dass** an dem Querdraht (5) neben den angrenzenden Rohren (7a, 7b) ein erstes ringförmiges Befestigungselement (8) und ein zweites ringförmiges Befestigungselement (9) angebracht sind, wobei in jeweils ein Befestigungselement (8, 9) ein hakenförmiges Ende (10, 11) des elastischen Verbindungselementes (6) einhängbar ist.

7. System nach Anspruch 6,
**dadurch gekennzeichnet,**
**dass** das elastische Verbindungselement (6) von dem ersten ringförmigen Befestigungselement (8) ausgehend zuerst über das naheliegende Rohr (7a) geführt ist, dann schlaufenförmig um das weiterentfernte Rohr (7b) gewickelt ist, dann wiederum schlaufenförmig um das naheliegende Rohr (7a) gewickelt ist und dann über das weiterentfernte Rohr (7b) geführt und in das zweite ringförmige Befestigungselement (9) eingehängt ist.

8. System nach einem der vorhergehenden Ansprüche,
**dadurch gekennzeichnet,**
**dass** über das obere Ende jedes Pfostens (4) ein Abspannelement (12) geführt ist, welches mit mindestens einen Ende in ein erstes ringförmiges Befestigungselement (8) am Querdraht (5) eingehängt ist.

9. System nach einem der vorhergehenden Ansprüche,
**dadurch gekennzeichnet,**
**dass** am oberen Ende jedes Pfostens (4) eine nach oben offene Ausnehmung (13) vorgesehen ist, in welcher der Firstdraht (2) verläuft.

10. System nach einem der vorhergehenden Ansprüche,
**dadurch gekennzeichnet,**
**dass** auf jedes Rohr (7) ein kreuzförmiges Fixierelement (14) aufgesteckt ist.

11. System nach einem der vorhergehenden Ansprüche,
**dadurch gekennzeichnet,**
**dass** in das firstnahe Ende der Folie (3) ein Sonnenschutzmaterial eingebracht ist.

## Claims

1. Film covering system to protect fruit crops from weather, with several rows of posts (1), wherein at least one ridge wire (2) runs above each row of posts (1) and transverse thereto at each post (4) runs a transverse wire (5), and a film (3) is clamped between each ridge wire (2) and a clamping element (7) arranged at the end of the film (3) close to the ground, wherein the clamping element (7) is a tube on which the film (3) can be wound and unwound, **characterised in that**
the end of the film (3) close to the ground is joined to the tube (7) by way of resilient connecting elements (6) and the tube (7) is connected detachably with the transverse wire (5) by way of further resilient connecting elements (6) and **in that** the tube (7) is a square tube, in the open end of which can be inserted a crank for winding the film (3).

2. System according to claim 1, **characterised in that** between two rows of posts (1), the tube (7) is detachably connected by way of resilient connecting elements (6) with the adjacent tube (7) of the adjacent row of posts (1).

3. System according to claim 2, **characterised in that** between two rows of posts (1), the tube (7) is detachably connected by way of resilient connecting elements (6) with the adjacent tube (7) of the adjacent row of posts (1) and with the transverse wire (5).

4. System according to any of the preceding claims, **characterised in that** the end of the film (3) close to the ridge can be permanently connected or resiliently connected with the ridge wire (2).

5. System according to any of the preceding claims, **characterised in that** the transverse wire (5) runs at three-quarters of the height of each post (4).

6. System according to claim 1 or 2, **characterised in that** on the transverse wire (5) next to the adjacent tubes (7a, 7b) is mounted a first annular fixing element (8) and a second annular fixing element (9), wherein a hook-like end (10, 11) of the resilient connecting element (6) can be suspended in each fixing element (8, 9).

7. System according to claim 6, **characterised in that** starting from the first annular fixing element (8), the resilient connecting element (6) is guided first over the nearest tube (7a) and then is wound loop-like about the remote tube (7b), then again is wound loop-like about the nearest tube (7a) and is then guided over the remote tube (7b) and suspended in the second annular fixing element (9).

8. System according to the preceding claim, **characterised in that** over the upper end of each post (4) is guided a tensioning element (12) which can be suspended with at least one end in a first annular fixing element (8) on the transverse wire (5).

9. System according to any of the preceding claims, **characterised in that** at the upper end of each post (4) is provided a recess (13) open at the top, in which runs the ridge wire (2).

10. System according to any of the preceding claims, **characterised in that** a cross-shaped fixing element (14) is pushed onto each tube (7).

11. System according to any of the preceding claims, **characterised in that** a sun protection material is held in the end of the film (3) close to the ridge.

## Revendications

1. Système de toiture à feuilles comme protection contre les intempéries pour des installations de culture fruitière, avec plusieurs rangées de poteaux (1), sachant qu'au moins un fil métallique de faîtage (2) s'étend sur chaque rangée de poteaux (1) et qu'un fil métallique transversal (5) s'étend transversalement au précédent sur chaque poteau (4), et qu'une feuille (3) est tendue entre chaque fil métallique de faîtage (2) et un élément tendeur (7) disposé à l'extrémité de la feuille (3) qui est proche du sol, sachant que l'élément tendeur (7) est un tube sur lequel la feuille (3) peut être enroulée et déroulée,
**caractérisé en ce que** l'extrémité de la feuille (3) qui est proche du sol est reliée au tube (7) par l'intermédiaire d'éléments de liaison élastiques (6) et le tube (7) est relié de manière détachable au fil métallique transversal (5) par l'intermédiaire d'autres éléments de liaison élastiques (6), et le tube (7) est un tube carré dans l'extrémité ouverte duquel peut être enfilée une manivelle pour enrouler la feuille (3).

2. Système selon la revendication 1, **caractérisé en ce que** le tube (7) peut, au moyen d'éléments de liaison élastiques (6), être relié de manière détachable entre deux rangées de poteaux (1) conjointement avec le tube contigu (7) de la rangée de poteaux voisine (1).

3. Système selon la revendication 2, **caractérisé en ce que** le tube (7) peut, au moyen d'éléments de liaison élastiques (6), être relié de manière détachable entre deux rangées de poteaux (1) conjointement avec le tube contigu (7) de la rangée de poteaux voisine (1) et avec le fil métallique transversal (5).

4. Système selon l'une des revendications précédentes, **caractérisé en ce que** l'extrémité de la feuille (3) qui est proche du faîtage peut être reliée fixement ou élastiquement au fil métallique de faîtage (2).

5. Système selon l'une des revendications précédentes, **caractérisé en ce que** le fil métallique transversal (5) s'étend aux trois-quarts de la hauteur de chaque poteau (4).

6. Système selon la revendication 1 ou 2, **caractérisé en ce qu'**un premier élément de fixation annulaire (8) et un deuxième élément de fixation annulaire (9) sont installés sur le fil métallique transversal (5) à côté des tubes contigus (7a, 7b), sachant qu'une extrémité en forme de crochet (10, 11) de l'élément de liaison élastique (6) peut être accrochée dans un élément de fixation respectif (8, 9).

7. Système selon la revendication 6, **caractérisé en ce que** l'élément de liaison élastique (6) est, en partant du premier élément de fixation annulaire (8), dirigé d'abord sur le tube le plus proche (7a), puis est enroulé en boucle autour du tube plus éloigné (7b), puis est à nouveau enroulé en boucle autour du tube le plus proche (7a), et enfin est dirigé sur le tube plus éloigné (7b) et accroché dans le deuxième élément de fixation annulaire (9).

8. Système selon l'une des revendications précédentes, **caractérisé en ce qu'**un élément de haubanage (12) est dirigé sur l'extrémité supérieure de chaque poteau (4), élément qui est accroché par au moins une extrémité dans un premier élément de fixation annulaire (8) sur le fil métallique transversal (5).

9. Système selon l'une des revendications précédentes, **caractérisé en ce qu'**un évidement (13) ouvert vers le haut, dans lequel s'étend le fil métallique de faîtage (2), est prévu à l'extrémité supérieure de chaque poteau (4).

10. Système selon l'une des revendications précédentes, **caractérisé en ce qu'**un élément d'immobilisation cruciforme (14) est emboîté sur chaque tube (7).

11. Système selon l'une des revendications précédentes, **caractérisé en ce qu'**un matériau pare-soleil est mis en place dans l'extrémité de la feuille (3) qui est proche du faîtage.
